# EUROPÄISCHE PATENTANMELDUNG

(11) **EP 1 253 157 A1**
(43) Veröffentlichungstag der Anmeldung: **30.10.2002**
(21) Anmeldenummer: 02008204.6
(22) Anmeldetag: 17.04.2002
(51) Int. Cl.: C08F 8/00

(54) **Verwendung von veretherten Vinylalkohol-Polymerisaten als Verdickungsmittel**

(30) Priorität: 26.04.2001 DE 10120492
(71) Anmelder: Wacker-Chemie GmbH, 81737 München (DE)
(72) Erfinder: Kayser, Bernd, Dr., 85579 Neubiberg (DE); Bauer, Werner, Dr., 84543 Winhöring (DE); Dietrich, Ulf, Dr., 84489 Burghausen (DE); Bacher, Andreas, Dr,, 84489 Burghausen (DE); Schmitz, Marion, Dr., 84489 Burghausen (DE); Zeh, Harald, Dr., 84489 Burghausen (DE); Mayer, Theo, Dr., 84387 Julbach (DE)
(74) Vertreter: Schuderer, Michael, Dr.

(57) **Zusammenfassung**

Gegenstand der Erfindung ist die Verwendung von veretherten Vinylalkohol-Polymerisaten auf der Basis von teil- oder vollverseiften Vinylacetat-Homopolymerisaten oder von teil- oder vollverseiften Vinylacetat-Mischpolymerisaten, deren Vinylalkohol-Gruppen jeweils zu 0.1 bis 100 Mol-% verethert sind, als Verdickungsmittel, wobei die veretherten Vinylalkohol-Einheiten die allgemeine Formel. (I) -CH2-CHR-O-R¹ haben und R die Bedeutung H oder CH₃ hat, und R¹ in den veretherten Vinylalkohol-Polymerisaten gleich oder verschieden ist, und für unsubstituierte und substituierte Alkyl-, Aryl- und Alkaryl-Reste mit jeweils 1 bis 30 C-Atomen steht, wobei die substituierten Alkyl-, Aryl- und Alkaryl-Reste mit einem oder mehreren Substituenten substituiert sind, aus der Gruppe umfassend Halogen, Hydroxy-, Amin-, Ammonium-, Carbonsäure-, Carbonsäureester-, Carbonsäureamid-, Ether-, Keto-, Sulfonsäure-, Phosphonat-, Nitrat-Reste sowie Polyoxyalkylen-Reste mit 2 bis 50 Oxyalkyleneinheiten mit jeweils 2 bis 8 C-Atomen.

## Beschreibung

Die Erfindung betrifft die Verwendung von veretherten Vinylalkohol-Polymerisaten als Verdickungsmittel (rheologische Additive), insbesondere als rheologische Additive in Baustoffmassen.

Verdickungsmittel werden in der Bauindustrie standardmäßig zur Verbesserung der Verarbeitungs- und Wasserretentionseigenschaften von Baustoffmassen, beispielsweise Zement-, Kalkhydrat- und Gipsmischungen, eingesetzt. Bei den Verdickungsmitteln handelt es sich um wasserlösliche Polymere deren Zusatz den Wasserverlust der Baustoffmassen auf stark saugenden Untergründen vor dem Abbinden verhindert, und damit eine ungenügende Durchhärtung der Baumasse und die Rißbildung verhindert. Weiterhin kann man mit solchen Zusatzstoffen das Eigenschaftsprofil der Baustoffmassen auf ein gewünschtes Anwendungsprofil angleichen.

Als verdickende Additive werden hauptsächlich wasserlösliche Polymere auf Basis von nichtionischen Celluloseethern wie Methylcellulose, Hydroxyethylcellulose, Methylhydroxyethylcellulose, Hydroxypropylcellulose eingesetzt. Obwohl solche Verdickungsmittel nur in geringen Mengen eingesetzt werden, stellen solche Verdicker auf Basis von Celluloseethern einen beachtlichen Kostenfaktor in Baustoffmassen dar. Es besteht somit ein Bedarf an kostengünstiger zugänglichen rheologischen Additiven.

Die genannten Celluloseether konkurrieren als Verdicker insbesondere mit vollsynthetischen Polymeren wie Polyurethan-Assoziativverdickern, Polyacrylaten, Polyiminen, Polyamiden, sowie natürlichen Polymeren wie Agar-Agar, Tragant, Carageen, Gummiarabicum, Alginate, Stärke, Gelatine und Casein. In Baustoffmassen, insbesondere in zementären Systemen, welche durch deren hohen pH-Wert und hohen Elektrolytgehalt gekennzeichnet sind, können diese Alternativen allerdings nicht zufriedenstellen. In diesen Anwendungen gibt es zu Celluloseether mit Blick auf Verarbeitungs- und Wasserretentionsanforderungen bisher keine Alternative.

Überraschenderweise wurde gefunden, daß Verdickungsmittel auf Basis von veretherten Vinylalkoholpolymerisaten in Baustoffmassen zu verbessertem Aufbruch und offener Zeit der Haftzugswerte führen.

Veretherte Polyvinylalkohole sind aus dem Stand der Technik bekannt:
Die DE-A 1645622 beschreibt die Herstellung von mit Alkyloder Alkenylgruppen veretherten Polyvinylalkoholen, welche in Lacken, Schutzüberzügen oder Textilhilfsmitteln eingesetzt werden können. In der DE-A 3542368 werden mit N-Methylolacrylamid veretherte Polyvinylalkohole und deren Verwendung in Offsetplatten beschrieben. Mit Alkylsulfonatgruppen veretherte Polyvinylalkohole, welche als viskositätssteigernde Ölbohrmittelzusätze verwendet werden, sind aus der EP-A 99631 bekannt. Die US-A 3386982 beschreibt die Herstellung von alkoxylierten Polyvinylalkoholen mittels alkoxylierten Aminen, wobei die Produkte zur Herstellung von Verpackungsfilmen verwendet werden. Die US-A 3505303 beschreibt die Herstellung von, mit Acrylamiden über Michael-Addition modifizierten, Polyvinylalkoholen, welche als Verpackungsmaterial Verwendung finden. Aus der US-A 4744865 ist die Verwendung von alkylierten Polyvinylalkoholen zur Verhinderung von Ablagerungen bei der Papierherstellung bekannt. Die US-A 5783628 betrifft carboxyalkylierte Polyvinylalkohole, welche insbesondere als Additive in Ölbohrmitteln empfohlen werden.

In der JP-A 11-157896 werden veretherte Polyvinylalkohole mit Carbonsäureamidgruppen im Etherrest als Zusätze zur Verbesserung der mechanischen Festigkeit von Beton empfohlen. Die JP-A 11-71150 beschreibt veretherte Polyvinylalkohole mit Carbonsäure-, Carbonsäureamid-, Sulfonat-, Ammonium-, oder HydroxylGruppe im Etherrest als Zusätze zur Verbesserung der mechanischen Festigkeit von Beton. In beiden Schriften werden rheologische Additive wie Celluloseether oder Stärkeether als weitere Zusätze empfohlen.

Der Erfindung lag die Aufgabe zugrunde, ein Verdickungsmittel zur Verfügung zu stellen, welches insbesondere in Baustoffmassen hervorragende Verarbeitungseigenschaften sicherstellt, ohne die obengenannten Nachteile zu zeigen.

Gegenstand der Erfindung ist die Verwendung von veretherten Vinylalkohol-Polymerisaten auf der Basis von teil- oder vollverseiften Vinylacetat-Homopolymerisaten oder von teil- oder vollverseiften Vinylacetat-Mischpolymerisaten, deren Vinylalkohol-Gruppen jeweils zu 0.1 bis 100 Mol-% verethert sind, als Verdickungsmittel, wobei die veretherten Vinylalkohol-Einheiten die allgemeine Formel (I) -CH₂-CHR-O-R¹ haben und R die Bedeutung H oder CH₃ hat, und R¹ in den veretherten Vinylalkohol-Polymerisaten gleich oder verschieden ist, und für unsubstituierte und substituierte Alkyl-, Aryl- und Alkaryl-Reste mit jeweils 1 bis 30 C-Atomen steht, wobei die substituierten Alkyl-, Aryl- und Alkaryl-Reste mit einem oder mehreren Substituenten substituiert sind, aus der Gruppe umfassend Halogen-, Hydroxy-, Amin-, Ammonium-, Carbonsäure-, Carbonsäureamid-, Carbonsäureester-, Ether-, Keto-, Sulfonsäure-, Phosphonat-, Nitrat-Reste sowie Polyoxyalkylen-Reste mit 2 bis 50 Oxyalkyleneinheiten mit jeweils 2 bis 8 C-Atomen.

Im allgemeinen beträgt der Hydrolysegrad der teilverseiften oder vollverseiften Vinylacetat-Homopolymerisate oder Vinylacetat-Mischpolymerisate 75 bis 100 Mol-%. Bei vollverseiften Vinylalkohol-Polymerisaten vorzugsweise von 97.5 bis 100 Mol-%, besonders bevorzugt von 98 bis 99.5 Mol-%. Bei teilverseiften Vinylalkohol-Polymerisaten vorzugsweise von 80 bis 95 Mol-%, besonders bevorzugt von 86 bis 90 Mol-%. Das gewichtsmittlere Molekulargewicht Mw der veretherten vinylalkohol-Polymerisate beträgt ≥ 100000, vorzugsweise 100000 bis 1000000. Der Veretherungsgrad beträgt 0.1 bis 100 Mol-%, vorzugsweise 0.5 bis 95 Mol-%, besonders bevorzugt 0.5 bis 50 Mol-%, am meisten bevorzugt 5 bis 30 Mol-%, jeweils bezogen auf die freien OH-Gruppen der teilverseiften oder vollverseiften Vinylacetat-Homopolymerisate oder Vinylacetat-Mischpolymerisate.

Die Vinylacetat-Mischpolymerisate können neben Vinylacetat-Einheiten noch Comonomereinheiten enthalten, welche sich von einem oder mehreren Comonomeren ableiten aus der Gruppe umfassend 1-Alkylvinylester mit C₁- bis C₅-Alkylrest von C₁- bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen. Der Anteil der genannten Comonomer-Einheiten beträgt 0.1 bis 50 Gew.-%, vorzugsweise 0.3 bis 15 Gew.-%, besonders bevorzugt 0.5 bis 6 Gew.-%, jeweils bezogen auf das Gesamtgewicht des Vinylacetat-Mischpolymerisats.

Bevorzugter 1-Alkylvinylester ist Isopropenylacetat. Bevorzugte Vinylester von alpha-verzweigten Carbonsäuren sind solche von alpha-verzweigten Carbonsäuren mit 9 bis 11 C-Atomen; besonders bevorzugt werden Vinylester von alpha-verzweigten Carbonsäuren mit 10 C-Atomen (VeoVa10, Handelsname der Fa. Shell). Bevorzugte Acrylsäure- und Methacrylsäureester sind solche von C₁- bis C₁₀-Alkoholen; besonders bevorzugt werden Methylacrylat, Ethylacrylat, n-Butylacrylat, t-Butylacrylat, 2-Ethylhexylacrylat und 2-Ethylhexylmethacrylat und Methylmethacrylat. Gegebenenfalls können noch 0.05 bis 2 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure, Crotonsäure, Itaconsäure und Maleinsäure; ethylenisch ungesättigte Carbonsäureamide und -nitrile, vorzugsweise Acrylamid und Acrylnitril; cyclische Carbonsäureamide wie N-Vinylpyrrolidon und N-Vinyl-ε-Caprolactam; ethylenisch ungesättigte Carbonsäureanhydride, vorzugsweise Maleinsäureanhydrid.

Besonders bevorzugt werden bei den Vinylacetat-Mischpolymerisaten solche mit jeweils 0.3 bis 15 Gew.-% Isopropenylacetat oder Vinylestern von alpha-verzweigten Carbonsäuren mit 9 bis 11 C-Atomen, oder Methyl-, Ethyl-, Butylacrylat; solche mit 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen; solche mit 0.5 bis 6 Gew.-% Isopropenylacetat und 0.5 bis 6 Gew.-% Vinylestern von alpha-verzweigten Carbonsäuren mit 10 C-Atomen (VeoVa10) und 0.5 bis 6 Gew.-% Methylacrylat; sowie solche mit 0.5 bis 6 Gew.-% Isopropenylacetat und 0.5 bis 6 Gew.-% 2-Ethylhexylmethacrylat und 0.5 bis 6 Gew.-% Methylacrylat.

Geeignete Reste R der veretherten Vinylalkohol-Einheiten der allgemeinen Formel (I) -CH₂-CHR-O-R¹ sind H und CH₃, bevorzugt ist H.

Bevorzugte Reste R¹ sind unsubstituierte Alkyl-Reste, unsubstituierte Aryl-Reste und unsubstituierte Alkaryl-Reste mit jeweils 1 bis 30 C-Atomen, besonders bevorzugt der Methyl-, Ethyl-, n-Propyl-, i-Propyl-, n-Butyl-, 2-Ethylhexyl, t-Butyl-, n-Pentyl-, n-Hexyl-, Benzyl-, Dodecyl-, Octadecyl-, Pentacosan- (C₂₅-), Hexacosan- (C₂₆-) und Heptacosan-Rest (C₂₇-). Bevorzugt werden auch substituierte Alkyl-Reste, substituierte Aryl-Reste und substituierte Alkaryl-Reste mit jeweils 1 bis 30 C-Atomen, welche mit einem oder mehreren Substituenten substituiert sind, jeweils aus der Gruppe umfassend OH-Rest, SO₃H-Rest, NO₂-Rest, OR²-Rest mit R² = C₁- bis C₁₈-Alkylrest; sowie NR³₂-Rest_{,} NR³₃⁺-Rest, COOR³-Rest, COR³-Rest, CONR³₃⁺-Rest wobei R³ jeweils gleich oder verschieden ist und H oder einen C₁- bis C₄-Alkylrest bedeutet; sowie Polyoxyethylen-, Polyoxypropylen- und Poly(oxyethylen)(oxypropylen)-Reste mit jeweils 2 bis 50 Oxyalkyleneinheiten.

Am meisten bevorzugte Reste R¹ sind die Reste Methyl, Ethyl, n-Propyl, n-Butyl, t-Butyl, 2-Ethylhexyl, n-Hexyl, Benzyl, Dodecyl, Octadecyl, Hydroxybenzyl, Hydroxymethyl, Hydroxyethyl, CH₂CH₂SO₃H, CH₂N(CH₃)₄⁺, CH₂CH₂NH₃⁺, CH₂COOH; CHR⁴CHR⁴COOH mit R⁴ = H und/oder CH₃; CH₂CH₂OR² mit R² = C₁- bis C₁₈-Alkylrest vorzugsweise Ethyl, Propyl oder Octadecyl; CHR⁴CHR⁴CONR³₃⁺ mit R³ = gleich oder verschieden und H und/oder C₁- bis C₄-Alkylrest, vorzugsweise H und/oder Methyl und mit R⁴ = H und/oder CH₃; sowie Polyoxyethylen-, Polyoxypropylen- und Poly(oxyethylen)-(oxypropylen)-Rest mit jeweils 2 bis 20 Oxyalkyleneinheiten.

Besonders bevorzugte veretherte Vinylalkohol-Polymerisate sind solche von vollverseiften Vinylacetat-Homopolymerisaten mit einem Hydrolysegrad von 97.5 bis 100 Mol-%, welche mit MethylResten, oder mit CH₂CH₂OR² mit R² = C₁- bis C₁₈-Alkylrest vorzugsweise Ethyl oder Propyl oder Octadecyl, oder mit Polyoxyethylen- oder Polyoxypropylen-Resten mit jeweils 2 bis 20 Oxyalkyleneinheiten, oder mit CHR⁴CHR⁴COOH-Resten oder mit CHR⁴CHR⁴CONR³₃⁺ -Resten mit R⁴ = H und/oder CH₃ und mit R³ = gleich oder verschieden und H und/oder C₁- bis C₄-Alkylrest, als Rest R¹ mit einem Veretherungsgrad von 5 bis 30 Mol-% verethert sind. Besonders bevorzugt sind auch veretherte Vinylalkohol-Polymerisate von vollverseiften Vinylacetat-Mischpolymerisaten, welche 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen enthalten, mit einem Hydrolysegrad von 97.5 bis 100 Mol-%, und welche mit Methylresten, oder mit CH₂CH₂OR² mit R² = C₁- bis C₁₈-Alkylrest vorzugsweise Ethyl oder Propyl oder Octadecyl, oder mit Polyoxyethylen-Resten oder Polyoxypropylen-Resten mit jeweils 2 bis 20 Oxyalkyleneinheiten, oder mit CHR⁴CHR⁴COOH-Resten oder mit CHR⁴CHR⁴CONR³₃⁺-Resten mit R⁴ = H und/oder CH₃ und mit R³ = gleich oder verschieden und H und/oder C₁- bis C₄-Alkylrest, als Rest R¹ mit einem Veretherungsgrad von 5 bis 30 Mol-% verethert sind.

Die Herstellung der veretherten Vinylalkohol-Polymerisate erfolgt in an sich bekannter Weise ausgehend vom entsprechenden Polyvinylalkohol durch nucleophile Substitution bzw. Michael-Addition des entsprechenden Alkylierungsmittels. Dazu wird eine wässrige Lösung des Polyvinylalkohols mit einer Base beliebiger Konzentration, bevorzugt Natronlauge, in Gegenwart eines mit Wasser mischbaren, organischen Lösungsmittels, beispielsweise Aceton oder Alkohole wie Isopropanol, alkalisiert. Das Alkylierungsmittel wird zugegeben und die Reaktion bei Temperaturen von 25°C bis 90°C, bevorzugt 70°C bis 90°C, und für die Dauer von 1 h bis 10 h, bevorzugt 3 h bis 5 h, durchgeführt. Durch die Zugabe von Säure, bevorzugt Essigsäure, wird neutralisiert und das Produkt in Methanol gefällt und als Feststoff isoliert. Geeignete Alkylierungsmittel sind die entsprechenden Halogenalkane, Acrylsäurederivate, Methacrylsäurederivate, Epoxide, Vinylverbindungen der Sulfonsäure oder Phosphorsäure. Die Alkylierungsmittel selbst können weiter funktionalisiert sein, beispielsweise mit Polyethylenoxid und/oder Polypropylenoxidketten, Alkylresten, Arylresten und funktionellen Gruppen wie Ammonium-, Hydroxy-, Ester-, Amid-, Ether- oder Säuregruppen.

Zur Veretherung kann auch eine Suspension des entsprechenden Polyvinylalkohols in einem organischen Lösemittel, bevorzugt Aceton, suspendiert und mit einer Mineralsäure, bevorzugt Salzsäure, angesäuert werden. Dann wird ein Alkylierungmittel, bevorzugt der entsprechende Vinylether, zugegeben und die Reaktion bei Rückflusstemperatur für die Dauer von 3 h bis 6 h durchgeführt. Das Produkt wird durch Entfernen des Lösemittels erhalten.

Die veretherten Vinylalkohol-Polymerisate können als Verdickungsmittel als wässrige Lösung, oder in Pulverform, oder als Additiv in wässrigen Polymerdispersionen oder in Wasser redispergierbaren Polymerpulvern eingesetzt werden. Sie können allein oder im Gemisch mit weiteren Rheologieadditiven eingesetzt werden. Im allgemeinen wird das Verdickungsmittel in einer Menge von 0.01 bis 20 Gew.-% Verdickungsmittel (fest), bezogen auf das Gesamtgewicht der zu verdickenden Zusammensetzung, eingesetzt. Die veretherten Vinylalkohol-Polymerisate eignen sich zur Verwendung als Verdickungsmittel auf allen Gebieten in denen rheologische Hilfsmittel eingesetzt werden. Beispielsweise als Verdickungsmittel in Kosmetika, im pharmazeutischen Bereich, in wasserbasierenden Siliconemulsionen oder in Siliconölen, in Beschichtungsmittel-Zusammensetzungen wie Dispersionsfarben oder Textilbeschichtungen, als Verdickungsmittel in Klebstoff-Zusammensetzungen, und als Verdickungsmittel in Bauanwendungen sowohl in hydraulisch abbindenden als auch nicht hydraulisch abbindenden Zusammensetzungen wie Beton, Zementmörtel, Kalkmörtel, Gipsmörtel. Möglich sind auch Anwendungen in wasserhaltigen Rezepturen in denen auch Celluloseether und Stärkeether als Verdickungsmittel eingesetzt werden.

Besonders bevorzugt sind die Bauanwendungen. Ganz besonders bevorzugt sind zementäre Bauanwendungen wie zementäre Baukleber (Fliesenkleber), zementäre Trockenmörtel, zementäre Verlaufsmassen, zementäre Dichtungsschlämme, zementäre Putze, zementäre Vollwärmeschutzkleber.

Typische Rezepturen für zementäre Bauanwendungen enthalten 5 bis 80 Gew.-% Zement, 5 bis 80 Gew.-% Füllstoffe wie Quarzsand, Calciumcarbonat oder Talkum, 0.5 bis 60 Gew.-% Polymerdispersion oder Polymerpulver, sowie 0.1 bis 5 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%. Die genannten zementhaltigen Rezepturen finden vor allem bei der Verlegung von Fliesen aller Art (Steingut, Steinzeug, Feinststeinzeug, Keramik, Naturfliesen) im Innen- und Außenbereich als Fliesenkleber Verwendung und werden vor deren Verwendung noch mit der entsprechenden Menge Wasser angerührt.

Die erfindungsgemäßen Verdickungsmittel eignen sich auch zur Verwendung in zementfreien Baurezepturen, beispielsweise mit der entsprechenden Menge Gips oder Wasserglas als anorganischem Bindemittel; vorzugsweise in gipshaltigen Zusammensetzungen wie Gipsputzen und Gipsspachtelmassen. Die zementfreien Rezepturen finden vor allem in Spachtelmassen, Fliesenklebern, Vollwärmeschutzklebern, Putzen und Farben Verwendung. Typische Rezepturen für Gipsformulierungen enthalten 15 bis 96 Gew.-% Gips, 3 bis 80 Gew.-% Füllstoffe wie Quarzsand, Calciumcarbonat oder Talkum, 0 bis 5 Gew.-% Kalkhydrat, 0 bis 5 Gew.-% Polymerdispersion oder Polymerpulver, sowie 0.01 bis 3 Gew.-% Verdickungsmittel, und gegebenenfalls weitere Additive zur Verbesserung von Standfestigkeit, Verarbeitbarkeit, offener Zeit und Wasserfestigkeit. Die Angaben in Gew.-% beziehen sich dabei immer auf 100 Gew.-% Trockenmasse der Rezeptur und addieren sich auf 100 Gew.-%.

Die veretherten Polyvinylalkohole zeigen als rheologische Hilfsmittel in zementären Baumassen, beispielsweise Fliesenklebern, hervorragende Verarbeitungseigenschaften. Celluloseether konnten bisher in zementären Bauformulierungen nur teilweise, unter erheblichen technischen Qualitätsverlusten der Baumasse, beispielsweise durch Stärkeverdicker oder wasserlösliche Polyacrylate substituiert werden. Polyvinylalkohole wurden bisher nur in geringen Einsatzmengen als Additivhilfsmittel eingesetzt. Mit den veretherten Polyvinylalkoholen können Celluloseether ohne Qualitätseinbußen in der zementären Anwendung ersetzt werden. Man erhält ein besseres Zementabbindeverhalten als mit Methylhydroxyethylcellulosen.

### Beispiel 1:

In einem Druckkessel mit 15 Liter Füllvolumen wurden 4350 g einer 6.5 %- igen wässrigen Lösung von Polyvinylalkohol (Hydrolysegrad 99.5 %, Molekulargewicht > 100000) vorgelegt. Nach dem Inertisieren (Evakuieren und Fluten mit Stickstoff) wurden 250 g Aceton und 565 g 46 %-ige Natronlauge zugegeben. Dann wurde 60 Minuten bei 25°C alkalisiert und anschließend 325 g Methylchlorid zugegeben. Das Reaktionsgemisch wurde auf 80°C erwärmt und für 4 Stunden bei dieser Temperatur gehalten. Nach dem Abkühlen auf Raumtemperatur wurde mit Essigsäure neutralisiert. Die Reaktionslösung wurde in einen Überschuss von Methanol tropfenweise eingegossen, wobei das Vinylalkoholpolymere als Niederschlag ausfiel. Das Produkt wurde abgesaugt und bei 50°C getrocknet.

Es wurde ein partiell mit Methylgruppen veretherter Polyvinylalkohol (Veretherungsgrad ca. 10 Mol-%) erhalten, welcher als Lösung oder in Pulverform eingesetzt werden kann.

### Beispiel 2:

Beispiel 1 wurde wiederholt, jedoch wurden statt Methylchlorid 150 g Ethylenoxid eingesetzt.
Es wurde ein partiell mit Oxyethylengruppen veretherter Polyvinylalkohol erhalten.

### Beispiel 3:

In einer Laborapparatur mit 3 Liter Füllvolumen wurden 835 g einer 6.5 %- igen wässrigen Lösung von Polyvinylalkohol (Hydrolysegrad 99.5 %, Molekulargewicht > 100000) vorgelegt. Nach dem Inertisieren (Evakuieren und Fluten mit Stickstoff) wurden 45 g Aceton und 6 g 46 %-ige Natronlauge zugegeben. Es wurde 60 Minuten bei 25°C alkalisiert. Anschließend wurden 5.5 g 1,2- Epoxybutan zugegeben. Das Reaktionsgemisch wurde auf 60°C erwärmt und für 4 Stunden bei dieser Temperatur gehalten. Nach dem Abkühlen auf Raumtemperatur wurde mit Essigsäure neutralisiert. Die Reaktionslösung wurde in einen Überschuss von Methanol tropfenweise eingegossen, wobei das Vinylalkoholpolymere als Niederschlag ausfiel. Das Produkt wurde abgesaugt und bei 50°C getrocknet.
Es wird ein partiell mit Butylgruppen veretherter Polyvinylalkohol (Veretherungsgrad ca. 5 Mol-%) erhalten, welcher als Lösung oder in Pulverform eingesetzt werden kann.

### Beispiel 4:

In einer Laborapparatur mit 3 Liter Füllvolumen werden 835 g einer 6.5 %- igen wässrigen Lösung von Polyvinylalkohol (Hydrolysegrad 99.5 % , Molekulargewicht > 100000) vorgelegt. Nach dem Inertisieren (Evakuieren und Fluten mit Stickstoff) wurden 45 g Aceton und 12 g 46 %-ige Natronlauge zugegeben. Es wurde 60 Minuten bei 25°C alkalisiert. Dann wurden 40 g 1- Bromhexan zugegeben. Das Reaktionsgemisch wurde auf 80°C erwärmt und für 4 Stunden bei dieser Temperatur gehalten. Nach dem Abkühlen auf Raumtemperatur wurde mit Essigsäure neutralisiert. Die Reaktionslösung wurde in einen Überschuss von Methanol tropfenweise eingegossen, wobei das Vinylalkoholpolymere als Niederschlag ausfiel. Das Produkt wurde abgesaugt und bei 50°C getrocknet.
Es wurde ein partiell mit Hexylgruppen veretherter Polyvinylalkohol (Veretherungsgrad ca. 5 Mol-%) erhalten, welcher als Lösung oder in Pulverform eingesetzt werden kann.

### Beispiel 5:

In einer Laborapparatur mit 3 Liter Füllvolumen wurden 40 g Polyvinylalkohol (Hydrolysegrad 99.5 %, Molekulargewicht > 100000) in 435 g Aceton suspendiert. Nach dem Inertisieren (Evakuieren und Fluten mit Stickstoff) wurden 2 g 37 %-ige Salzsäure und 14 g Ethylvinylether zugegeben. Das Reakionsgemisch wurde auf Rückflusstemperatur erwärmt und für 5 h bei dieser Temperatur gehalten. Nach dem Abkühlen auf Raumtemperatur werden die flüchtigen Anteile entfernt und das Produkt noch bei 50°C getrocknet.
Es wurde ein partiell mit Ethyloxyethylresten veretherter Polyvinylalkohol (Veretherungsgrad ca. 15 Mol %) erhalten, welcher als Lösung oder in Pulverform eingesetzt werden kann.

### Beispiel 6:

Beispiel 1 wurde wiederholt, jedoch wurde ein vollverseiftes Mischpolymerisat von Vinylacetat, Vinylestern von alpha-verzweigten Carbonsäuren mit 10 C-Atomen (Veova10) und Isopropenylacetat mit einem Hydrolysegrad von ca.99 % eingesetzt.

### Beispiel 7:

Beispiel 2 wurde wiederholt, jedoch wurde ein vollverseiftes Mischpolymerisat von Vinylacetat, Vinylestern von alpha-verzweigten Carbonsäuren mit 10 C-Atomen (Veova10) und Isopropenylacetat mit einem Hydrolysegrad von ca.99 % eingesetzt.

### Beispiel 8:

Beispiel 3 wurde wiederholt, jedoch wurde ein vollverseiftes Mischpolymerisat von Vinylacetat, Vinylestern von alpha-verzweigten Carbonsäuren mit 10 C-Atomen (Veova10) und Isopropenylacetat mit einem Hydrolysegrad von ca.99 % eingesetzt.

### Beispiel 9:

Beispiel 4 wurde wiederholt, jedoch wurde ein vollverseiftes Mischpolymerisat von Vinylacetat, Vinylestern von alpha-verzweigten Carbonsäuren mit 10 C-Atomen (Veova10) und Isopropenylacetat mit einem Hydrolysegrad von ca.99 % eingesetzt.

### Beispiel 10:

Beispiel 5 wurde wiederholt, jedoch wurde ein vollverseiftes Mischpolymerisat von Vinylacetat, Vinylestern von alpha-verzweigten Carbonsäuren mit 10 C-Atomen (Veova10) und Isopropenylacetat mit einem Hydrolysegrad von ca.99 % eingesetzt.

### Beispiel 11:

In einer Laborapparatur mit 3 Liter Füllvolumen wurden 1750 g einer 5.0 %- igen wässrigen Lösung eines vollverseiftes Mischpolymerisats von Vinylacetat, Vinylestern von alpha-verzweigten Carbonsäuren mit 10 C-Atomen (Veova10) und Isopropenylacetat vorgelegt. Nach dem Inertisieren (Evakuieren und Fluten mit Stickstoff) wurden 17.5 g 10 %-ige Natronlauge zugegeben und die Temperatur auf 30°C erhöht. Dann wurden 35 g 25 %-ige Vinylsulfonatlösung zugegeben. Das Reaktionsgemisch wurde für 5 h bei 30°C gehalten. Nach dem Abkühlen auf Raumtemperatur wurde mit Essigsäure neutralisiert und die Reaktionslösung um ein Drittel des ursprünglichen Volumens reduziert. Die Reaktionslösung wurde in einen Überschuss einer Mischung von Aceton/ Methanol (4:1) tropfenweise eingegossen, wobei das veretherte Vinylalkoholpolymere als Niederschlag ausfiel. Das Produkt wurde abgesaugt und bei 50°C getrocknet. Es wurde ein partiell mit Ethylsulfonsäure-Resten veretherter Polyvinylalkohol (Veretherungsgrad ca. 3 Mol-%) erhalten, welcher als Lösung oder in Pulverform eingesetzt werden kann.

### Beispiel 12:

Beispiel 11 wurde wiederholt, jedoch wurde statt Vinylsulfonat 30 g einer 30 %-igen Acrylamidlösung eingesetzt.
Es wurde ein partiell mit CH₂CH₂CONH₂-Resten veretherter Polyvinylalkohol (Veretherungsgrad ca. 5 Mol-%) erhalten, welcher als Lösung oder in Pulverform eingesetzt werden kann.

### Vergleichsbeispiel 13:

Handelsübliche Hydroxyethylmethylcellulose mit einer Höpplerviskosität von 6000 mPas (DIN 53015, 2 %-ige wässrige Lösung).

### Vergleichsbeispiel 14:

Handelsüblicher, vollverseifter Polyvinylalkohol mit einem Hydrolysegrad von 99.5 Mol-% und einem Molekulargewicht > 100000.

### Testung der Verdickungsmittel:

Die Prüfung der Verdickungsmittel wurde in folgender Formulierung durchgeführt:
55.2 Gew.-Teile Quarzsand Nr.9a (0.1-0.4 mm),
43.0 Gew.-Teile Zement 42.5 (Rohrdorfer),
1.5 Gew.-Teile Redispersionspulver (Vinnapas RE 530 Z),
0.7 Gew.-Teile Verdickungsmittel,
Die Trockenmischung wurde mit der in der Tabelle 1 angegebenen Menge Wasser versetzt, die Mischung 5 Minuten stehen gelassen und danach der Prüfung unterzogen.

### Testmethoden:

Die Testergebnisse sind in Tabelle 1 zusammengefaßt.

### Bestimmung der Kellenklebrigkeit:

Die Kellenklebrigkeit der Mischung wurde qualitativ mittels optischer Beurteilung bestimmt. Die Bewertung erfolgte in einer Notenskala von 1 bis 6, wobei die Note 1 das Optimum darstellt.

### Bestimmung der Geschmeidigkeit:

Die Geschmeidigkeit der Mischung wurde qualitativ mittels optischer Beurteilung bestimmt. Die Bewertung erfolgte in einer Notenskala von 1 bis 6, wobei die Note 1 das Optimum darstellt.

### Bestimmung der Benetzung:

Die Benetzung einer Fliese während des Aufziehens des Mörtels wurde qualitativ mittels optischer Beurteilung bestimmt. Die Bewertung erfolgte in einer Notenskala von 1 bis 6, wobei die Note 1 das Optimum darstellt.

### Bestimmung der Stegausbildung:

Die Stegausbildung wurde qualitativ mittels optischer Beurteilung bestimmt. Die Bewertung erfolgte in einer Notenskala von 1 bis 6, wobei die Note 1 das Optimum darstellt.

### Bestimmung des Nachdickens:

Das Nachdicken der Mischung wurde qualitativ mittels optischer Beurteilung bestimmt. Die Bewertung erfolgte in einer Notenskala von 1 bis 6, wobei die Note 1 das Optimum darstellt.

### Bestimmung der Wasserretention:

Die Wasserretention wurde nach DIN 18555 Teil 7 vorgenommen.

### Bestimmung des Aufbruchs:

Der Aufbruch wurde von einer nach 10 Minuten in den Mörtel eingelegten Fliese (5 x 5 cm) nach 60 Minuten bestimmt durch Ausmessen der Benetzung der Fliesenrückseite mit Mörtel.

### Bestimmung der Standfestigkeit (Abrutschtest):

Zum Abrutschtest wurde eine Fliese (15 x 15 cm) wie oben in die Fliesenkleberformulierung eingelegt und der Probenaufbau senkrecht gestellt. Anschließend wurde die Oberkante der Fliese für jeweils 30 Sekunden mit Gewichten belastet und festgestellt, bei welchem Gewicht die Fliese abrutscht.

### Bestimmung der offenen Zeit

Die offene Zeit wurde nach EN 1348 durchgeführt.

### Bestimmung des Zementabbindeverhaltens:

Das Zementabbindeverhalten wurde in einer Mischung aus Zement, Wasser und Verdicker-Polymer (Wasser/Zement 0.4; Polymer/-Zement 0.0075) mit einem Thermofühler bestimmt. Der benutzte Prüfzement war Rohrdorf 42,5 R. Es wurde die maximale Temperatur des Abbindevorgangs bestimmt und relativ zur polymerfreien Mischung das Verzögern (Werte > 100) bzw. das Beschleunigen des Abbindens (Werte < 100) bestimmt.

### Diskussion der Meßergebnisse:

Die Testergebnisse zeigen, daß die Verdickungsmittel auf Basis der veretherten Vinylalkohol-Polymerisate (Beispiele 1 bis 12) gegenüber herkömmlichem Polyvinylalkohol (Vergleichsbeispiel 14) eine deutlich bessere Verarbeitbarkeit (Kellenklebrigkeit, Geschmeidigkeit, Nachdicken) aufweisen, und eine wesentlich bessere verdickende Wirkung (Aufbruch, Wasserretention). Gegenüber herkömmlichen Verdickungsmittel auf Basis von Celluloseethern (Vergleichsbeispiel 13) zeichnen sich die veretherten Vinylalkohol-Mischpolymerisate durch eine deutlich bessere Verarbeitbarkeit (Geschmeidigkeit, Benetzung, Stegausbildung) und ein deutlich beschleunigtes Abbindeverhalten (Zementabbindung) aus.

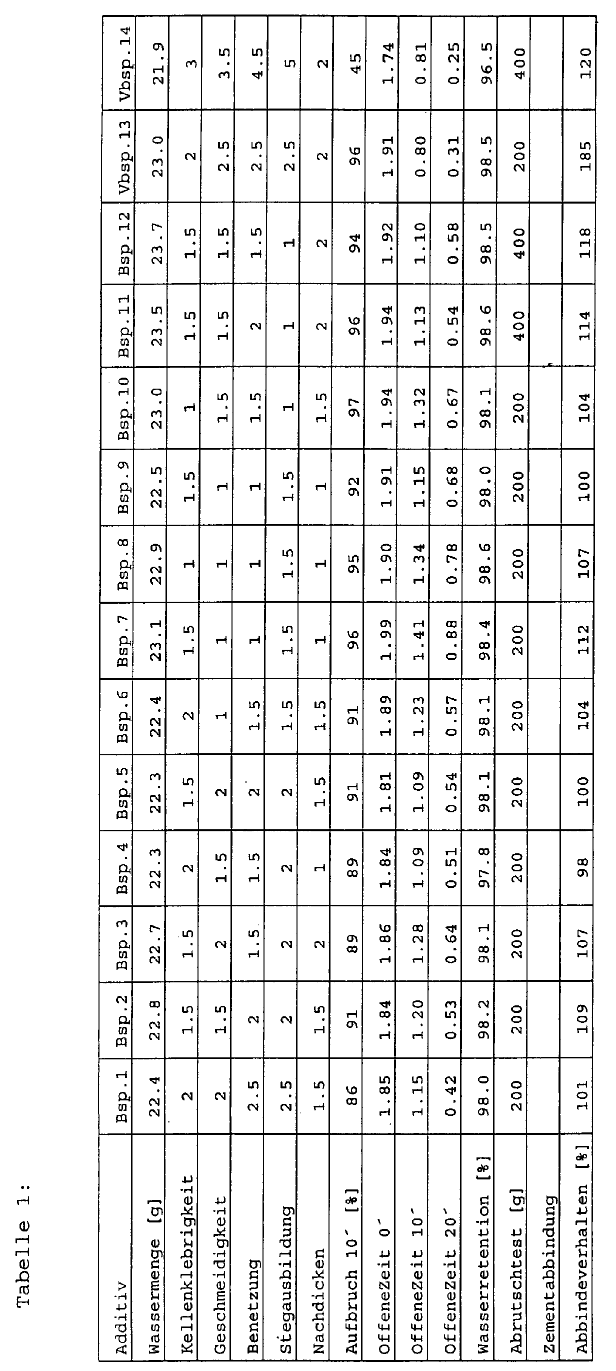

## Patentansprüche

1. Verwendung von veretherten Vinylalkohol-Polymerisaten auf der Basis von teil- oder vollverseiften Vinylacetat-Homopolymerisaten oder von teil- oder vollverseiften Vinylacetat-Mischpolymerisaten, deren Vinylalkohol-Gruppen jeweils zu 0.1 bis 100 Mol-% verethert sind, als Verdickungsmittel, wobei die veretherten Vinylalkohol-Einheiten die allgemeine Formel (I) -CH2-CHR-O-R¹ haben und R die Bedeutung H oder CH₃ hat, und R¹ in den veretherten Vinylalkohol-Polymerisaten gleich oder verschieden ist, und für unsubstituierte und substituierte Alkyl-, Aryl- und Alkaryl-Reste mit jeweils 1 bis 30 C-Atomen steht, wobei die substituierten Alkyl-, Aryl- und Alkaryl-Reste mit einem oder mehreren Substituenten substituiert sind, aus der Gruppe umfassend Halogen, Hydroxy-, Amin-, Ammonium-, Carbonsäure-, Carbonsäureester-, Carbonsäureamid-, Ether-, Keto-, Sulfonsäure-, Phosphonat-, Nitrat-Reste sowie Polyoxyalkylen-Reste mit 2 bis 50 Oxyalkyleneinheiten mit jeweils 2 bis 8 C-Atomen.

2. Verwendung nach Anspruch 1, **dadurch gekennzeichnet, daß** veretherte Vinylalkohol-Polymerisate auf der Basis von Vinylacetat-Homopolymerisaten oder Vinylacetat-Mischpolymerisaten mit einem Hydrolysegrad von 75 bis 100 Mol-% verwendet werden.

3. Verwendung nach Anspruch 1 oder 2, **dadurch gekennzeichnet, daß** veretherte Vinylalkohol-Polymerisate verwendet werden, auf der Basis von vollverseiften Vinylacetat-Homopolymerisaten oder von vollverseiften Vinylacetat-Mischpolymerisaten mit Comonomereinheiten, welche sich von einem oder mehreren Comonomeren ableiten aus der Gruppe umfassend 1-Alkylvinylester mit C₁- bis C₅-Alkylrest von C₁bis C₅-Carbonsäuren, Allylester, Vinylester von alpha-verzweigten Carbonsäuren mit 5 bis 12 C-Atomen, Acrylsäure- und Methacrylsäureester von C₁- bis C₁₈-Alkoholen, mit einem Hydrolysegrad von jeweils 97.5 bis 100 Mol-%, und mit einem Veretherungsgrad von jeweils 0.5 bis 50 Mol-%, bezogen auf die freien OH-Gruppen der vollverseiften Vinylacetat-Homopolymerisate oder Vinylacetat-Mischpolymerisate.

4. Verwendung nach Anspruch 1 bis 3, **dadurch gekennzeichnet, daß** die Reste R¹ gleich sind und unsubstituierte Alkyl-, Aryl- und Alkaryl-Reste sind, aus der Gruppe umfassend Methyl-, Ethyl-, n-Propyl-, i-Propyl-, n-Butyl-, t-Butyl-, n-Pentyl-, n-Hexyl-, 2-Ethylhexyl-, Benzyl, Dodecyl-, Octadecyl-, Pentacosan- (C₂₅-), Hexacosan- (C₂₆-) und Heptacosan-Rest (C₂₇-).

5. Verwendung nach Anspruch 1 bis 3, **dadurch gekennzeichnet, daß** die Reste R¹ gleich sind und substituierte Alkyl-, Aryl- und Alkaryl-Reste mit jeweils 1 bis 30 C-Atomen sind, welche mit einem Substituenten substituiert sind, jeweils aus der Gruppe umfassend OH-Rest, SO₃H-Rest, NO₂-Rest-, OR²-Rest mit R² = C₁- bis C₁₈-Alkylrest, sowie NR³₂-Rest, NR³₃⁺-Rest, COOR³-Rest, COR³-Rest, CONR³₃⁺-Rest wobei R³ jeweils gleich oder verschieden ist und H oder einen C₁bis C₄-Alkylrest bedeutet, sowie Polyoxyethylen-, Polyoxypropylen- und Poly(oxyethylen)(oxypropylen)-Reste mit jeweils 2 bis 50 Oxyalkyleneinheiten.

6. Verwendung nach Anspruch 1 bis 3, **dadurch gekennzeichnet, daß** die Reste R¹ gleich sind und einen Rest aus der Gruppe umfassend Methyl, Ethyl, n-Propyl, n-Butyl, t-Butyl, n-Hexyl, 2-Ethylhexyl-, Benzyl, Dodecyl, Octadecyl, Hydroxymethyl, Hydroxyethyl, Hydroxybenzyl, CH₂CH₂SO₃H, CH₂N(CH₃)₄⁺, CH₂CH₂NH₃⁺, CH₂COOH, CHR⁴CHR⁴COOH mit R⁴ = H und/oder CH₃, CH₂CH₂OR² mit R² = C₁- bis C₁₈-Alkylrest, CHR⁴CHR⁴CONR³₃⁺ mit R³ = gleich oder verschieden und H und/oder C₁- bis C₄-Alkylrest und R⁴ = H und/oder CH₃ , Polyoxyethylen-, Polyoxypropylen- und Poly(oxyethylen)(oxypropylen)-Rest mit jeweils 2 bis 20 Oxyalkyleneinheiten, bedeuten.

7. Verwendung nach Anspruch 1 bis 3, **dadurch gekennzeichnet, daß** veretherte Vinylalkohol-Polymerisate von vollverseiften Vinylacetat-Homopolymerisaten mit einem Hydrolysegrad von 97.5 bis 100 Mol-%, welche mit Methylresten als Rest R¹ oder mit Polyoxyethylen- oder Polyoxypropylen-Resten mit jeweils 2 bis 20 Oxyalkyleneinheiten mit einem Veretherungsgrad von 5 bis 30 Mol-% verethert sind, oder veretherte Vinylalkohol-Polymerisate von vollverseiften Vinylacetat-Mischpolymerisaten, welche 0.3 bis 15 Gew.-% Isopropenylacetat-Einheiten und 0.3 bis 15 Gew.-% Einheiten von Vinylestern von alpha-verzweigten Carbonsäuren mit 9 bis 11 C-Atomen enthalten, mit einem Hydrolysegrad von 97.5 bis 100 Mol-%, welche als Rest R¹ mit Methylresten, oder mit CH₂CH₂OR² mit R² = C₁- bis C₁₈-Alkylrest vorzugsweise Ethyl oder Propyl oder Octadecyl, oder mit Polyoxyethylen- oder Polyoxypropylen-Rest mit jeweils 2 bis 20 Oxyalkyleneinheiten mit einem Veretherungsgrad von 5 bis 30 Mol-% verethert sind, verwendet werden.

8. Verwendung nach Anspruch 1 bis 7, **dadurch gekennzeichnet, dass** die Verdickungsmittel als wässrige Lösung, oder in Pulverform, oder als Additiv in wässrigen Polymerdispersionen oder in Wasser redispergierbaren Polymerpulvern in einer Menge von 0.01 bis 20 Gew.-% Verdickungsmittel (fest), bezogen auf das Gesamtgewicht der zu verdickenden Zusammensetzung, in Kosmetika, im pharmazeutischen Bereich, in wasserbasierenden Siliconemulsionen, in Siliconölen, in Beschichtungsmittel-Zusammensetzungen, in Klebstoff-Zusammensetzungen, und in Bauanwendungen verwendet werden.

9. Verwendung nach Anspruch 8 in Bauanwendungen mit hydraulisch abbindenden und nicht hydraulisch abbindenden Zusammensetzungen.

10. Verwendung nach Anspruch 9 in zementären Bauklebern, zementären Trockenmörteln, zementären Verlaufsmassen, zementären Dichtungsschlämmen, zementären Putzen, zementären Vollwärmeschutzkleber.

11. Verwendung nach Anspruch 9 in zementfreien Spachtelmassen, Putzen, Fliesenklebern und Vollwärmeschutzklebern.

12. Verwendung nach Anspruch 11 in gipshaltigen Zusammensetzungen.

13. Verwendung nach Anspruch 12 in Gipsputzen und Gipsspachtelmassen.

14. Verwendung nach Anspruch 9 bis 13 im Gemisch mit in Wasser redispergierbaren Redispersionspulvern.
